# EUROPEAN PATENT SPECIFICATION

(11) **EP 1 181 168 B1**
(45) Date of publication and mention of the grant of the patent: **18.06.2003**
(21) Application number: 00938706.9
(22) Date of filing: 15.05.2000
(51) Int. Cl.: B60M 3/00

(54) **AC TRACTION POWER SUPPLY SYSTEM**
WECHSELSTROMVERSORGUNGSANLAGE FÜR EISENBAHN
SYSTEME D'ALIMENTATION EN COURANT ALTERNATIF DE TRACTION

(30) Priority: 17.05.1999 GB 9911464
(43) Date of publication of application: 27.02.2002
(73) Proprietor: Balfour Beatty PLC, London SW1V 1LQ (GB)
(72) Inventor: SCHÜTTE, Thorsten, S-722 28 Västeras (SE)
(74) Representative: Reyier, Ann-Mari
(86) International application number: EP0004910
(87) International publication number: WO00069667

(56) References cited:
- DE-C- 301 503
- TRISTAN A. KNESCHKE: "Control of utility system unbalance caused by single-phase electric traction" IEEE TRANSACTIONS ON INDUSTRY APPLICATIONS, vol. 21, no. 6, - November 1985 (1985-11) pages 1559-1569, XP002116759 New York, USA
- R.J. HILL: "Electric Railway Traction part 3 Traction Power Supplies" POWER ENGINEERING JOURNAL, - December 1994 (1994-12) pages 275-286, XP002145151 Hitchin. GB cited in the application

## Description

### BACKGROUND TO THE INVENTION

The present invention relates to an alternating current electricity supply system for traction.

The use of booster transformers (BTs) in traction power supplies is described in R.J. Hill, Electric Railway Traction - Part 3 - Traction Power Supplies, Power Engineering Journal, December 1994, pp. 275-286. BTs rated at a few 100 kVA are placed at intervals of approximately 3 km, for a 25 kV 50 or 60 Hz supply, or approximately 5 km, for a 15 kV, 16.7 Hz supply, along a catenary. The primary winding of each BT is connected across a gap in the contact wire. A return conductor is provided in parallel with the rails and the secondary of the BT is connected into the return conductor. The turns ratio of the BT is unity and traction current is forced from the rails and earth to flow through the return conductor and transformer secondary to equalise the Ampère-turns in the core set up by the primary current. This arrangement reduces earth currents which might otherwise cause interference with adjacent telecommunication circuits. The main disadvantages of this arrangement are due to the series connection of the BTs in the main circuit, adding their impedances to the system impedance, and causing power losses. Only the linear part of the magnetisation curve of the core material can be used, as disturbing harmonics would be generated otherwise. This increases the size of the BTs.

As an alternative to BTs, autotransformers (ATs) may be used, as also described in Hill. The winding of each AT is connected between the catenary and a negative feeder, with the rails connected to an intermediate point. The train draws current mainly from two adjacent ATs, but to a smaller degree also from remote ones. The total supply current is the train current divided by the transformation ratio of the ATs, most usually two, which implies a negative feeder with opposite phase, but the same voltage with respect to ground as the catenary. The current is transformed from the catenary-rail circuit into the negative feeder-catenary circuit. As in the BT system, rail current is also removed into a feeder system in the AT system, but with less perfection. In contrast to BT current balancing, the AT system operates by balancing voltages. ATs are expensive and due to their imperfect removal of rail return current and with it the associated disturbing earth current, their separation should not exceed the typical distances between two BTs in a conventional BT system by much more than a factor of two. This is a distance much smaller than necessary for the power transmission needs.

In GB-A-2342333 and GB 9910123.0 combinations of ATs and BTs are used, allowing larger distances between the ATs, which distances are sufficient for power transmission. The return current is controlled by the action of BTs, balancing the currents in catenary, negative feeder and return conductor simultaneously (GB-A-2342333) or separately in the catenary-return conductor system and a positive and negative feeder system (GB 9910123.0). In these arrangements, the substantial decrease in the number of costly ATs constitutes a major improvement, but the disadvantages relating to BTs in the main circuit/circuits remain.

### SUMMARY OF THE INVENTION

The present invention provides an alternating current traction power supply system, comprising a supply conductor, a return conductor, a positive feeder conductor and a negative feeder conductor, said return conductor, positive feeder conductor and negative feeder conductor all being connected to a winding of each of a plurality of autotransformers provided at intervals along said conductors, at least one current booster transformer being provided in the or each interval between the autotransformers, said current booster transformer having a first winding connecting the positive feeder conductor to the supply conductor and a second winding connecting the return conductor to rails along which vehicles are constrained to run, and the supply conductor being discontinuous on either side of the or each current booster transformer. Thus the supply conductor, which is generally a catenary, is divided to form at least one section and preferably a plurality of sections, each fed by a BT.

In this arrangement, only one BT at time is inserted between the traction load and the feeding system. Due to the separated catenary sections all BTs connected to no-load sections are completely deenergized, neither constituting additional impedances, nor generating losses or harmonics. As the BTs' loading is low or intermediate, their rating and size can be reduced considerably. They can also be designed as ordinary transformers with respect to the levels of magnetic induction allowed for their core, having a magnetic flux density greater than 1 T and e.g. approximately 1.8 T instead of the 0.7 T necessary to remain in a no-harmonics-generating linear mode which is imperative for BTs in conventional arrangements.

Preferably, catenary sections with their associated BT can be disconnected by disconnectors if faulty, the power transmission capability to other sections through the positive feeder/negative feeder/return conductor system remaining intact.

This traction supply system may be used for any voltage, voltage ratio and frequency. The most typical nominal voltages are +/- 25 kV for 50 or 60 Hz, +/- 15 kV or +15/-25 kV for 16.7 Hz. The - sign relates to the negative feeder voltage.

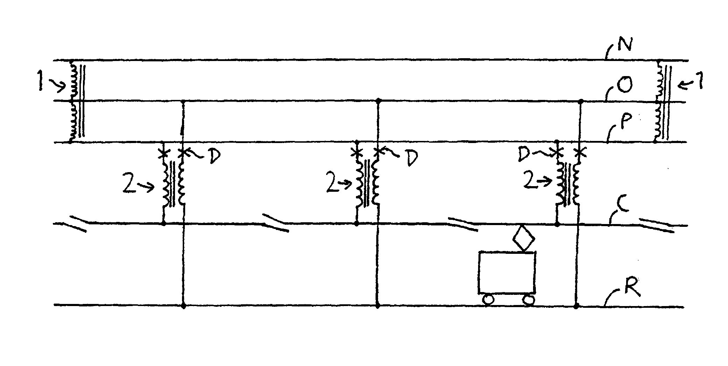

### BRIEF DESCRIPTION OF THE DRAWING

The present invention will now be described in more detail, by way of example only, with respect to the accompanying drawing, the single figure of which is a circuit diagram of an embodiment of an AC traction power supply system.

### DETAILED DESCRIPTION OF THE PREFERRED EMBODIMENT

The Figure shows a traction power supply system comprising a sectionalised catenary C, rails R, a return conductor 0, a positive feeder conductor P and a negative feeder conductor N. The winding of each of a number of ATs 1 has one end connected to the positive feeder P, an intermediate point connected to the return conductor O and its other end connected to the negative feeder N.

The catenary C is divided into a plurality of discontinuous sections, with a BT 2 being provided in each section. A first winding of the BT 2 connects the catenary to the positive feeder P and a second winding connects the rails R to the return conductor O. The BTs 2 equalise the positive feeder-catenary and the return conductor-rail current.

As shown, there are a plurality of catenary sections in the interval between the two adjacent ATs 1, each catenary section being fed through its dedicated BT 2, and having a length of the same order as the distance between BTs in conventional BT power supply systems. Faulty catenary sections with their associated BTs 2 can be separated by disconnectors D, the power transmission capability to other sections through the positive feeder/negative feeder/return conductor system remaining intact.

In order to exemplify the large difference between a railway feeding system according to the invention and the prior art for conventional BT systems or a combined BT and AT system according to GB 9821696.3, the number of BTs to be traversed by the current to a traction load 30 km distant from a power feeding station for a 50 or 60 Hz railway (3 km BT separation) is nine for the prior art compared to only one for the present invention.

In systems according to the prior art the current to all traction loads fed from a power feeding station will pass through the BTs, which therefore have to be designed for permanent loading with a current corresponding to a number of individual traction loads. The BTs generate losses continuously. As series components, they have to have linear magnetisation characteristics in order to avoid generation of harmonics. This means working at maximum magnetic flux densities below about 0.7 T compared to about 1.8 T for a conventional transformer, with a considerable increase of transformer size as a consequence.

BTs used according to the present invention will only be loaded with a load seldom exceeding one individual traction load during the time interval a load is located within the section. For this short time and low load, the magnetisation characteristics of an ordinary transformer are sufficient. Together with the strongly reduced rating and the possibility of dissipating heat accumulated during load intervals when unloaded this allows for a substantially reduced size of the BTs, allowing e.g. the reuse of old BTs with low rating or the construction of small BTs in coaxial cable technology according to PCT/EP99/02782. Insulation between the coaxial conductors of the winding of such BTs includes two semiconducting polymeric layers with solid polymeric insulation between them. The BTs of the invention can be made light enough for mounting on ordinary catenary poles instead for the reinforced poles used for the conventional BTs with a weight of a few tons.

## Claims

1. An alternating current traction power supply system, comprising a supply conductor (C), a return conductor (O), a positive feeder conductor (P) and a negative feeder conductor (N), said return conductor, positive feeder conductor and negative feeder conductor all being connected to a winding of each of a plurality of autotransformers (1) provided at intervals along said conductors, at least one current booster transformer (2) being provided in the or each interval between the autotransformers (1), said current booster transformer (2) having a first winding connecting the positive feeder conductor (P) to the supply conductor (C) and a second winding connecting the return conductor (O) to rails (R) along which vehicles are constrained to run, and the supply conductor (C) being discontinuous on either side of the or each current booster transformer (2).

2. A system according to claim 1, comprising a plurality of said current booster transformers (2), each connected to a discontinuous section of said supply conductor (C).

3. A system according to claim 1 or 2, wherein the magnetic flux density induced in the or each current booster transformer (2) in use is greater than 1 T.

4. A system according to claim 3, wherein said magnetic flux density is approximately 1.8 T.

5. A system according to any preceding claim, comprising disconnectors for disconnecting the or each current booster transformer (2) from the positive feeder conductor (P) and the return conductor (O).

## Patentansprüche

1. Wechselstrom-Bahnleistungsversorgungssystem mit einer Versorgungsleitung (C), einer Rückleitung (O), einer positiven Zuleitung (P) und einer negativen Zuleitung (N), wobei die Rückleitung, die positive Zuleitung und die negative Zuleitung alle mit einer Wicklung jeder einer Mehrzahl von an Intervallen entlang der Leiter vorgesehenen Auto-Transformatoren (1) verbunden sind, wobei mindestens ein Stromverstärkungstransformator (2) in dem oder jedem Intervall zwischen den Auto-Transformatoren (1) vorgesehen ist, wobei der Stromverstärkungstransformator (2) eine erste Wicklung, die die positive Zuleitung (P) mit der Versorgungsleitung (C) verbindet, und eine zweite Wicklung aufweist, die die Rückleitung(O) mit Schienen (R) verbindet, entlang dieser Fahrzeuge zwangsläufig laufen, und die Versorgungsleitung (C) an jeder Seite des oder jedes Stromverstärkungstransformators (2) diskontinuierlich ist.

2. System gemäß Anspruch 1 mit einer Mehrzahl der Stromverstärkungstransformatoren (2), die jeweils mit einem diskontinuierlichen Abschnitt der Versorgungsleitung (C) verbunden sind.

3. System gemäß Anspruch 1 oder 2, bei dem die in dem oder in jedem Stromverstärkungstransformator (2) beim Gebrauch induzierte magnetische Flussdichte größer als 1 T ist.

4. System gemäß Anspruch 3, bei dem die magnetische Flussdichte ungefähr 1,8 T ist.

5. System gemäss einem der vorhergehenden Ansprüche mit Trennern zum Trennen des oder jedes Stromverstärkungstransformators (2) von der positiven Zuleitung (P) und der Rückleitung (O).

## Revendications

1. Système d'alimentation en courant alternatif de traction, comprenant un conducteur d'alimentation (C), un conducteur de retour (O), un conducteur d'amenée positif (P) et un conducteur d'amenée négatif (N), ledit conducteur de retour, ledit conducteur d'amenée positif et ledit conducteur d'amenée négatif étant tous connectés à un bobinage de chacun d'une pluralité d'autotransformateurs (1) disposés à intervalles le long desdits conducteurs, au moins un transformateur survolteur de courant (2) étant disposé dans le ou chaque intervalle entre les autotransformateurs (1), ledit transformateur survolteur de courant (2) ayant un premier bobinage connectant le conducteur d'amenée positif (P) au conducteur d'alimentation (C) et un second bobinage connectant le conducteur de retour (O) à des rails (R) le long desquels des véhicules sont contraints d'avancer, et le conducteur d'alimentation (C) étant discontinu sur l'un ou l'autre côté du ou de chaque transformateur survolteur de courant (2).

2. Système selon la revendication 1, comprenant une pluralité desdits transformateurs survolteurs de courant (2), chacun connecté à une section discontinue dudit conducteur d'alimentation (C).

3. Système selon l'une des revendications 1 ou 2, dans lequel la densité de flux magnétique induite dans le ou chaque transformateur survolteur de courant (2) lors de l'utilisation est supérieure à 1 T.

4. Système selon la revendication 3, dans lequel ladite densité de flux magnétique est d'approximativement 1,8 T.

5. Système selon l'une quelconque des revendications précédentes, comprenant des sectionneurs pour déconnecter le ou chaque transformateur survolteur de courant (2) du conducteur d'amenée positif (P) et du conducteur de retour (O).
